**Europäisches Patentamt**

**European Patent Office**

**Office européen des brevets**

(19)

(11) Veröffentlichungsnummer: **0 030 665**

**A1**

(12) **EUROPÄISCHE PATENTANMELDUNG**

(21) Anmeldenummer: **80107449.3**

(22) Anmeldetag: **28.11.80**

(51) Int. Cl.³: **E 03 C 1/10**

(30) Priorität: **05.12.79 DE 2948841**

(43) Veröffentlichungstag der Anmeldung:
**24.06.81 Patentblatt 81/25**

(84) Benannte Vertragsstaaten:
**CH FR LI NL SE**

(71) Anmelder: **Braukmann Armaturen AG
Bahnweg 2
CH-4852 Rothrist(CH)**

(72) Erfinder: **Vollmer, Rudolf
Friedrich-Hölderlin-Strasse 23
D-6950 Mosbach/Baden(DE)**

(74) Vertreter: **Schmid, Berthold et al,
Patentanwälte Dipl.-Ing. B. Schmid Dr. Ing. G. Birn
Falbenhennenstrasse 17
D-7000 Stuttgart 1(DE)**

(54) **Rückflussverhinderer.**

(57) Der Rückflußverhinderer besitzt einen Zuflußstutzen (2) und einen dazu koaxialen Abflußstutzen (3). Sein Ventil (24) wird durch den als Ventilsitz dienenden Dichtring (23) und das entlang der Tragstange (14) verschiebbare Verschlußglied (20) gebildet. Eine Belastungsfeder (16) im Inneren des topfförmigen Verschlußglieds (20) stützt sich mit ihrem einen Ende (17) am Topfboden (19) und mit ihrem anderen (18) an einem Tragglied (15) ab, welches fest mit der Tragstange (14) verbunden und damit gegenüber dem Gehäuse (1) ortsfest ist. Durch den hydraulischen Druck wird das Verschlußglied (20) gegen die Kraft der Belastungsfeder (16) von seiner oberen in seine untere Verschiebeendstellung gebracht. Sein unteres Ende wirkt mit einem Dichtring (27) im unteren Gehäuseteil (7) zusammen und bildet damit ein Ablaßventil (28). Letzteres wird kurz vor dem Öffnen des Ventils (24) geschlossen, so daß das über den Stutzen (2) eintretende Wasser nur über den Abflußstutzen (3) abfließen kann. Bei zu geringem Vordruck oder Strömungsumkehr öffnet sich das Ablaßventil (28) und gleichzeitig wird dann das Ventil (24) geschlossen. Man verhindert dadurch das Eindringen von meist verschmutztem rückströmendem Wasser in den Zuflußstutzen (2).

EP 0 030 665 A1

13 652 B/bm

Braukmann Armaturen AG

R o t h r i s t   (Schweiz)

Rückflußverhinderer

Die Erfindung bezieht sich auf einen Rückflußverhinderer, insbesondere zum Einbau in eine Hauswasserleitung, mit einem federbelasteten Ventil-Verschlußorgan, wobei sich zur Bildung eines Ablaßventils in Durchströmrichtung hinter dem Ventil eine verschließbare Ablaßöffnung befindet und das in Schließrichtung des Ventils federbelastete Verschlußorgan topfartig ausgebildet und dichtend im Ventilsitz sowie der Ablaßöffnung verschiebbar ist, wobei die Länge des mit den Dichtelementen von Ventilsitz und Ablaßöffnung zusammenwirkenden Verschlußorgans bzw. -organteils in Verschieberichtung gesehen etwa dem Abstand der Dichtelemente entspricht. Ein Rückflußverhinderer dieser Art ist bereits vorgeschlagen worden und er erfüllt an sich die an ihn gestellten Forderungen. Seine Aufgabe besteht bekanntlich darin, das Medium, insbesondere Brauchwasser, in einem Haus lediglich in einer Richtung durchströmen zu lassen und bei unerwünschter aber nicht zu verhindernder Strömungsumkehr das Rückfließen zu verhindern. Das in Schließrichtung federbelastete Verschlußorgan wird bei normaler Strömungsrichtung durch den hydraulischen Druck in die Offenstellung verschoben. Sobald der Vordruck unter einem bestimmten Wert abfällt und infolgedessen die entgegen dem hydraulischen Druck wirkende Federkraft überwiegt, wird das Verschlußorgan von letzterer in die Schließstellung überführt. Das Ventil-Verschlußorgan arbeitet mit einem Ventilsitz zusammen, dessen Ausbildung von der Konstruktion des Verschlußorgans abhängt.

Zu dem erwähnten Rückströmen kann beispielsweise eine Waschmaschine oder Geschirrspülmaschine Anlaß geben und beim Fehlen des Rückflußverhinderers würde somit verschmutztes Wasser
in die Trinkwasserleitung gelangen. Falls bei einer Rückströmung das Ventil-Verschlußorgan in die Schließstellung
geht, öffnet sich zugleich das Ablaßventil dessen Ventil-
Verschlußorgan mit demjenigen des Absperrventils verbunden,
insbesondere einstückig hergestellt ist. Über das Ablaßventil kann dann das rückströmende verschmutzte Wasser abgezogen werden, sofern man es nicht anderweitig am Rückströmen hindert. Im letzteren Falle wird über das Ablaßventil lediglich der Druck in dem normalerweise abströmseitigen Gehäuseteil abgebaut.

Die Aufgabe der Erfindung besteht nun darin, einen Rückflußverhinderer der eingangs genannten Art dahingehend
zu verbessern, daß sein Strömungswiderstand verringert wird.

Zur Lösung dieser Aufgabe wird erfindungsgemäß vorgeschlagen,
daß ein Rückflußverhinderer gemäß dem Oberbegriff des Anspruchs 1 entsprechend dem kennzeichnenden Teil des ersten
Anspruchs ausgebildet ist. Weil sich nunmehr die für die
Funktion des Rückflußverhinderers unerläßliche Belastungsfeder im Ventilverschlußorgan befindet, dem man ohne weiteres
eine strömungsgünstige Außenkontur verleihen kann, kann es an dieser Feder zu keinen den Innenwiderstand erhöhenden
Wirbelbildungen kommen und damit erreicht man das angestrebte Ziel einer Verringerung des Durchflußwiderstands
dieses Rückflußverhinders.

Eine bevorzugte Ausführungsform der Erfindung mit einer
als Schraubendruckfeder ausgebildeten Belastungsfeder sieht
vor, daß sich das Stützglied für das andere Federende an
einer die Belastungsfeder zentrisch durchsetzenden gehäusefesten Tragstange befindet. Das Stützglied kann an letztere
angeformt oder daran befestigt sein. Zweckmäßigerweise bildet
man es tellerförmig aus, wobei man noch einen ins Innere des
zugeordneten Federendes eingreifenden Zentrieransatz anbringen
kann. Das Stützglied schließt in weiterer Ausgestaltung der
Erfindung in der Schließlage des Ventil-Verschlußorgans etwa
bündig mit dessen dem Ablaßventil zugewandten Topfrand ab.
Damit kann dann auch bei einer eventuellen Rückströmung kein
Schmutz od. dgl. ins Innere des Ventil-Verschlußorgans eintreten.
Wenn man, was an sich vorgesehen ist, auf eine Dichtung zwischen
dem Außenrand des Stützglieds und der Innenfläche des Ventil-Verschlußorgans verzichtet, so ist das Eindringen von rückfließendem Wasser ins Innere des Ventil-Verschlußorgans eventuell mög-

lich, jedoch können Schmutzteilchen praktisch nicht eindringen, wenn man den Ringspalt klein genug hält.

In weiterer Ausbildung der Erfindung wird vorgeschlagen,
daß die Tragstange in ein Gehäusegewinde eingeschraubt ist,
und sich an der Außenfläche des Stützglieds ein Montageelement für die Tragstange befindet. Mit Hilfe des Montageelements kann die Tragstange und das vorzugsweise bereits
daran anmontierte Stützglied in das Gehäusegewinde eingedreht werden. Zur Reparaturzwecken entnimmt man die Tragstange mit dem Stützglied und dem Ventil-Verschlußorgan
ebenfalls mit Hilfe des Montagelements indem man die Tragstange wieder aus ihrem Befestigungsgewinde herausschraubt.

Eine vorteilhafte Weiterbildung der Erfindung sieht vor,
daß das über das Stützglied überstehende freie Ende der
Tragstange zur Bildung des Montagelements als Schraubenkopf gestaltet ist oder eine Aufnahme für ein Montagewerkzeug aufweist. Im Falle eines Schraubenkopfs kann man
sowohl einen normalen Schlitz als auch einen Kreuzschlitz
als auch einen Innensechskant vorsehen. Alle diese Elemente
bilden zugleich eine Aufnahme für ein dementsprechend ausgebildetes Montageelement, beispielsweise einen Schraubenzieher oder einen Innensechskantschlüssel. Selbstverständlich ist es auch denkbar, auf einen überstehenden Schraubenkopf od. dgl. zu verzichten und statt dessen die Aufnahme für
das Montagewerkzeug unmittelbar in die freie, nach außen weisend¡
Fläche des Stützglieds einzuarbeiten.

Im Abflußstutzen befindet sich in vorteilhafter Weise ein
Rückschlagventil herkömmlicher Bauart, welches das Rückströmen des Mediums ins Gehäuseinnere des Rückflußverhinderers
unterbindet.

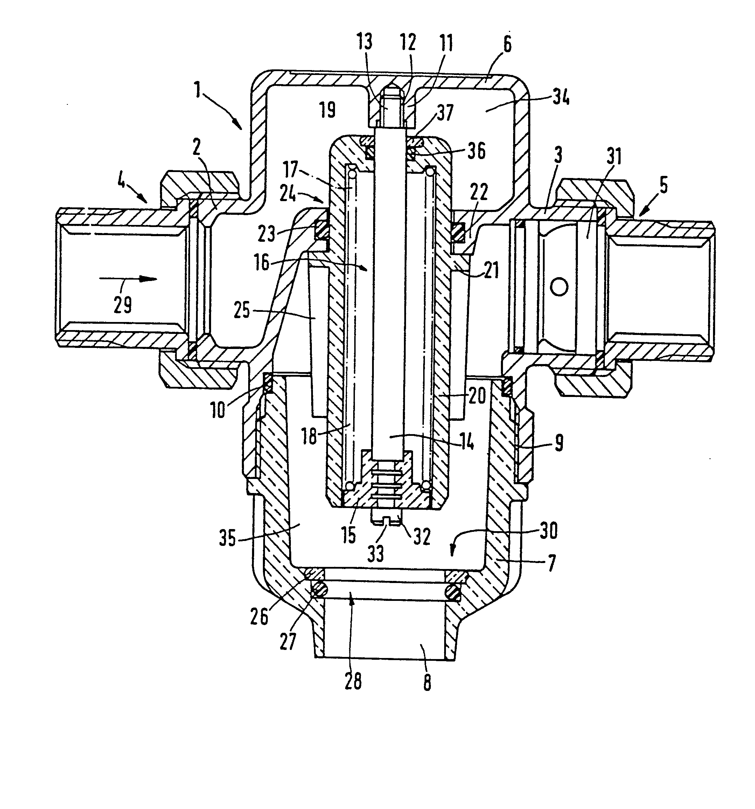

In der Zeichnung ist ein Ausführungsbeispiel der Erfindung
anhand eines Vertikallängsmittelschnitts dargestellt.

Das Gehäuse 1 des Rückflußverhinderers besitzt einen Zuflußstutzen 2 und einen dazu koaxialen Abflußstutzen 3, so daß
es in einen durchgehenden Leitungsstrang eingesetzt werden
kann. Beide Stutzen können mit je einer Verschraubung 4 bzw.
5 versehen sein. Das Gehäuse 1 ist zweiteilig ausgebildet,
wobei das obere Gehäuseteil 6 die erwähnten Stutzen 2 und 3
aufweist, während sich am unteren Gehäuseteil 7 eine Abfluß-

Öffnung befindet. Zweckmäßigerweise besteht das obere
Gehäuseteil aus Metall, während man das untere Gehäuseteil
aus Kunststoff, vorzugsweise durchscheinendem oder durchsichtigem Kunststoff, herstellt. Die beiden Gehäuseteile sind
über ein Gewinde 9 miteinander verbunden und mittels eines
Dichtrings 1o, vorzugsweise O-Ring, gegeneinander abgedichtet.

In ein an einem Gehäuseauge 11 eingeschnittenes Gewinde 12
ist das als Gewindebolzen 13 ausgebildete eine Ende einer
Tragstange 14 für ein Tragglied 15 eingeschraubt. Die Tragstange 14 ist konzentrisch von einer als Schraubendruckfeder ausgebildeten Belastungsfeder 16 umgeben, deren eines
Ende 17 an der Innenseite des Topfbodens 19 eines topfförmigen Verschlußorgans 2o abstützt, während ihr anderes
Ende 18 an der Innenfläche des Tragglieds 15 aufliegt.
Da letzteres gegenüber dem Gehäuse ortsfest ist, bewirkt
die Kraft der Belastungsfeder 15 daß das Verschlußorgan 2o
in die in der Zeichnung gezeigte Schließstellung gebracht
und dort gehalten wird. Dabei stützt sich dann ein Außenbund 21 an der Gehäusezwischenwand 22 ab, deren Bohrung vom
oberen Ende des Verschlußglieds durchsetzt ist und einen
Dichtring, vorzugsweise O-Ring, 23 aufnimmt. Letzterer bildet zugleich den Ventilsitz, der mit dem Verschlußorgan 2o zusammen das Ventil 24 des Rückflußverhinderers darstellt.

An die Unterseite des Außenbunds 21 können sich noch gleichmäßig am Umfang verteilte Rippen 25 anschließen, die einerseits der Verstärkung dienen und deren in der Zeichnung untere Enden einen Anschlag für die untere Verschiebeendstellung des Verschlußglieds 2o darstellen. In dieser nichtgezeigten anderen Verschiebeendstellung stützen sich die Rippen auf dem Haltering 26 für einen weiteren Dichtring, vorzugsweise O-Ring, 27 ab. Letzterer bildet mit dem unteren Ende des Verschlußorgans 2o das Ablaßventil 28. Die Länge des Verschlußorgans 2o ist bei festem Abstand der Dichtringe 23 und 27 so gewählt, daß das Ablaßventil 28 geschlossen ist bevor sich das Ventil 24 öffnet.

Das Medium, beispielsweise Frischwasser, strömt dem Rückflußverhinderer in Pfeilrichtung 29 zu. Wenn die auf die Oberseite des Verschlußglieds 2o einwirkende hydraulische Druckkraft größer ist als die in entgegengesetztem Sinne wirkende Kraft der Belastungsfeder 16 bewirkt dies ein Verschieben des Verschlußglieds 2o in Richtung des Pfeils 3o, wobei wie gesagt das Ventil 24 geöffnet wird, nachdem kurz zuvor das Ablaßventil 28 geschlossen worden ist. Damit kann das Medium durch den Ventilsitz 23 hindurch zur Abströmseite fließen und den Rückflußverhinderer über den Abflußstutzen 3 verlassen. In letzteren kann vorteilhafterweise noch ein kleines Rückschlagventil 31 bekannter Bauart abnehmbar eingesetzt sein.

Wenn der Vordruck absinkt oder eine Strömungsumkehr stattfindet, so bewegt sich das Verschlußglied 2o aufgrund der Kraft der Belastungsfeder 16 wieder in die in der Zeichnung dargestellte obere Ednlage in welcher das Ventil 24 geschlossen und das Ablaßventil 28 geöffnet ist. Der Abflußstutzen 3 ist üblicherweise mit einem Verbraucher, beispielsweise einer Wasch- oder Geschirrspülmaschine, verbunden. Im Falle einer derartigen Rückströmung verhindert nun der erfindungsgemäße Rückflußverhinderer ein Eindringen des verschmutzten Wassers in den Zuflußstutzen 2 und damit in die Frischwasserleitung. Wenn man auf das Rückschlagventil 31 verzichtet, so strömt das verschmutzte Wasser über die Abflußöffnung 8 ab. An diese kann sich eine weiterführende Abflußleitung anschließen, die mit dem Abwasserkanal in Verbindung steht. Bei Verwendung eines Rückschlagventils 31 endigt die Rückströmung an der Anbaustelle desselben und über die Abflußöffnung 8 tritt dann lediglich das abströmseitige Schmutzwasser des Rückflußverhinderers.

Letzterer zeichnet sich durch eine besonders einfache
und damit nicht nur preiswert zu fertigende, sondern auch
störungsfrei arbeitende Konstruktion aus. Wenn man vom
Rückschlagventil 31 absieht, so besitzt der Rückflußverhinderer lediglich ein einziges bewegbares Teil, nämlich das topfförmige Verschlußglied 2o. Da erfindungsgemß die Belatungsfeder 16 im Innern des Verschlußglieds
2o untergebracht ist, erreicht man einerseits deren geschützte Anordnung und andererseits einen extrem geringen
Innenwiderstand des erfindungsgemäßen Rückflußverhinderers.
Die Montage der einzelnen Teile einschließlich des eventuell
vorhandenen Rückschlagventils 31 ist außerordentlich einfach
zu bewerkstelligen. Hierzu trägt auch die besondere Ausgestaltung der Tragstange 14 im Bereich des Tragglieds 15 bei.
Sie besitzt ein der Außenfläche des Stütztglieds 15 zugeoordnetes Montageelement 32, das beispielsweise die Form eines
herkömmlichen Schraubenkopfes haben kann. Dabei bildet dann
der Schlitz, Kreuzschlitz od. dgl. dieses Montagelements 32
eine Aufnahme 33 für ein Montagewerkzeug, also einen Schraubenzieher, Innensechskantschlüssel od. dgl. Damit läßt sich die
aus Tragstange, Traglied, Belastungsfeder und Verschlußglied

bestehende Einheit rasch und leicht montieren sowie demontieren. Zur Abdichtung des Vordruckraums 34 gegenüber dem Hinterdruckraum 35 ist die Tragstange 14 abgedichtet durch den Topfboden 19 des Verschlußorgans 2o hindurchgeführt. Ein entsprechender Dichtring bzw. O-Ring 36 wird in diesem Topfboden von einer eingepreßten Scheibe 37 gehalten. Das Tragglied 15 kann an das untere Ende der Tragstange 14 angeformt, beispielsweise angespritzt, werden, wobei man dann an der Tragstange noch entsprechende Verankerungselemente, beispielsweise Ringscheiben, anformen kann.

<u>A n s p r ü c h e</u>

1.   Rückflußverhinderer, insbesondere zum Einbau in eine
Hauswasserleitung mit einem federbelasteten Ventil-Verschlußorgan, wobei sich zur Bildung eines Ablaßventils in Durchströmrichtung hinter dem Ventil eine verschließbare Ablaßöffnung befindet und das in Schließrichtung des Ventils federbelastete Verschlußorgan topfartig ausgebildet und dichtend
im Ventilsitz sowie der Ablaßöffnung verschiebbar ist, wobei
die Länge des mit den Dichtelementen von Ventilsitz und Ablaßöffnung zusammenwirkenden Verschlußorgans bzw. -organteils
in Verschieberichtung gesehen etwa dem Abstand der Dichtelemente,
dadurch gekennzeichnet, daß sich die Belastungsfeder (16) des
Ventil-Verschlußorgans (2o) in dessen Innerem befindet, wobei
sich ihr eines Ende am Topfboden (19) des Verschlußorgans und
ihr anderes an einem gehäusefesten Stützglied (15) abstützen.

2.   Rückflußverhinderer nach Anspruch 1, mit einer als
Schraubendruckfeder ausgebildeten BelastungsfTXer, dadurchgekennzeichnet, daß sich das Stützglied (15) für das andere
Federende (18) an einer die Belastungsfeder zentrisch durchsetzenden gehäusefesten Tragstange (14) befindet.

3. Rückflußverhinderer nach Anspruch 2, dadurch gekennzeichnet, daß das Stützglied (15) in der Schließlage des Ventil-Verschlußorgans (2o) etwa bündig mit dessen dem Ablaßventil (38) zugewandten Topfrand abschließt.

4. Rückflußverhinderer nach Anspruch 2 oder 3, dadurch gekennzeichnet, daß die Tragstange (14) in ein Gehäusegewinde (12) eingeschraubt ist und sich an der Außenfläche des Stützglieds (15) ein Montageelement (32) für die Tragstange befindet.

5. Rückflußverhinderer nach Anspruch 4, dadurch gekennzeichnet, daß das über das Stützglied (15) überstehende freie Ende der Tragstange (14) zur Bildung des Montageelements (32) als Schraubenkopf gestaltet ist oder eine Aufnahme (33) für ein Montagewerkzeug aufweist.

6. Rückflußverhinderer nach einem oder mehreren der vorhergehenden Ansprüche, dadurch gekennzeichnet, daß sich im Abflußstutzen (3) ein Rückschlagventil (31) befindet.

# EUROPÄISCHER RECHERCHENBERICHT

**Europäisches Patentamt**

Nummer der Anmeldung

EP 80107449.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 650 934 (WALETZKO) <br> + Gesamt + <br> -- | 1,2 |
| | DE - A1 - 2 650 655 (HARRI MONES) <br> + Gesamt + <br> -- | 1 |
| A | DE - A - 1 550 125 (BRISTOL) <br> -- | |
| A | GB - A - 1 301 712 (KAYSER) <br> -- | |
| A | DE - C - 123 400 (HANSEN) <br> -- | |
| A | US - A - 3 542 062 (ZAHID) <br> -- | |
| A | US - A - 3 026 897 (DERRINGTON) <br> -- | |
| A | US - A - 3 022 797 (ALLIN) <br> -- | |
| A | DE - A1 - 2 751 468 (BRAUKMANN) <br> -- | |
| A | DE - A1 - 2 729 3o5 (OVENTROP) <br> ---- | |

**KLASSIFIKATION DER ANMELDUNG (Int. Cl.³)**

E 03 C 1/10

**RECHERCHIERTE SACHGEBIETE (Int. Cl.³)**

E 03 C 1/00

F 16 K 1/00

F 16 K 3/00

F 16 K 17/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 12-02-1981 | URBAN |

EPA form 1503.1    06.78